# FASCICULE DE BREVET EUROPEEN

(11) **EP 0 857 262 B1**
(45) Date de publication et mention de la délivrance du brevet: **21.05.2003**
(21) Numéro de dépôt: 97919119.4
(22) Date de dépôt: 17.09.1997
(51) Int. Cl.: F16D 13/75

(54) **EMBRAYAGE A FRICTION, NOTAMMENT POUR VEHICULE AUTOMOBILE COMPORTANT UN DISPOSITIF DE RATTRAPAGE D'USURE**
REIBUNGSKUPPLUNG FÜR KRAFTFAHRZEUGE MIT EINER VERSCHLEISS-NACHSTELLEINRICHTUNG
FRICTION CLUTCH, IN PARTICULAR FOR MOTOR VEHICLE, COMPRISING A WEAR ADJUSTING DEVICE

(30) Priorité: 17.09.1996 FR 9611297; 26.12.1996 FR 9616043
(43) Date de publication de la demande: 12.08.1998
(73) Titulaire: VALEO EMBRAYAGES, 80009 Amiens Cedex 1 (FR)
(72) Inventeur: BLARD, Michel, F-92130 Issy-les-Moulineaux (FR); THIRION DE BRIEL, Jacques, F-92700 Colombes (FR)
(74) Mandataire: Gamonal, Didier
(86) Numéro de dépôt international: FR9701645
(87) Numéro de publication internationale: WO98012446

(56) Documents cités:
- FR-A- 2 424 442
- FR-A- 2 739 159
- GB-A- 2 022 729
- US-A- 5 320 205

## Description

La présente invention concerne un embrayage à friction, notamment pour véhicule automobile, et se rapporte plus particulièrement à un embrayage équipé d'un dispositif compensateur d'usure pour compenser l'usure notamment à l'usure des garnitures de friction, ledit dispositif, dit ci-après dispositif de rattrapage d'usure, opérant au fur et à mesure de l'usure desdites garnitures.

Un embrayage à friction classique comporte généralement un plateau de réaction, éventuellement en deux parties pour formation d'un Volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boite de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage. Plus précisément la butée de débrayage agit sur le dispositif débrayeur de l'embrayage (les doigts du diaphragme), lequel contrecarre alors l'action des moyens embrayeurs de l'embrayage (la partie périphérique du diaphragme en forme de rondelle Belleville) agissant sur le plateau de pression.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions (positions) de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant globalement la même position lorsque l'embrayage est en position d'engagement.

On a déjà proposé, par exemple dans la demande de brevet français déposée le 21 Septembre 1995 sous le numéro 95 11090 et publié sous le numéro 2 739 159, un embrayage à friction, notamment pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes disposées circonférentiellement, placés axialement entre les moyens d'appui et le plateau de pression et adaptés à être entraînés en rotation grâce à une denture qu'ils portent à leur périphérie et avec laquelle coopère une vis sans fin, des moyens d'entraînement en rotation de la vis sans fin étant prévus, rendus opérationnels par l'usure des garnitures de friction lorsque l'embrayage est embrayé.

Ces embrayages donnent satisfaction. Toutefois, on comprendra que la précision et la fiabilité du rattrapage d'usure dépendent de la bonne tenue en fonctionnement des moyens à rampes ; ceux-ci étant implantés au coeur de l'embrayage, ils sont soumis à des températures élevées et peuvent être amenés à se déformer.

La présente invention a pour but de pallier ces inconvénients.

Ainsi, selon l'invention, un embrayage à friction du type ci-dessus est caractérisé par le fait que les moyens à rampes présentent des ouvertures de ventilation.

Avantageusement, les moyens à rampes sont constitués d'un anneau présentant des rampes inclinées et réparties circonférentiellement ; le plateau de pression présente des plots ou des rampes destinés à coopérer avec les rampes des moyens à rampes.

Avantageusement, ledit anneau présente également des zones d'appui constituées par l'arête supérieure arrondie d'emboutis disposés en arcs de cercle centrés sur l'axe de l'embrayage et placés radialement à l'extérieur par rapport aux rampes.

De préférence, les moyens à rampes présentent un rebord axial muni d'ouvertures de ventilation ;

Avantageusement, le rebord axial centre les moyens à rampes par rapport aux moyens de pression.

Avantageusement, chaque ouverture est aux droit d'une rampe

De préférence, il y a autant d'ouvertures que de rampes.

Les moyens élastiques à action axiale sont constitués par un diaphragme ou par des rondelles Bellevilles montées en série.

Avantageusement, la vis sans fin et les moyens d'entraînement en rotation de la vis sont portés par un support solidaire du couvercle et les moyens d'entraînement en rotation, de la vis sans fin, sont commandés par le diaphragme.

L'embrayage peut être du type poussé ou tiré.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en coupe, selon la ligne I-I de la figure 2, d'un embrayage équipé d'un dispositif de rattrapage d'usure selon l'invention ;
- la figure 2 est une vue partielle en coupe de l'embrayage, selon la ligne II-II de la figure 1, partiellement arraché ;
- la figure 3 est une vue partielle en coupe selon la ligne III-III de la figure 2 ;
- la figure 4 est une vue en perspective du dispositif de rattrapage sans son support ;
- la figure 5 est une vue en perspective montrant l'organe élastique ;
- les figures 6 à 8 montrent le support du dispositif de rattrapage : la figure 6 est une vue en plan, la figure 7 est une vue en coupe selon la ligne VII-VII de la figure 6, et la figure 8 est une vue en coupe selon la ligne VIII-VIII de la figure 6 ;
- la figure 9 est une vue partielle en plan montrant l'appendice actionneur du diaphragme ;
- la figure 10 est une vue de côté, selon la flèche X de la figure 11, montrant les moyens à rampes ;
- la figure 11 est une vue en plan, avec arrachement partiel, de l'embrayage sans son diaphragme ;
- la figure 12 est une vue en coupe selon la ligne XII-XII de la figure 11 ;
- la figure 13 est une vue en coupe selon la ligne XIII-XIII de la figure 11 ;
- la figure 14 est une vue en coupe selon la ligne XIV-XIV de la figure 11 ;
- la figure 15 est une vue en coupe selon la ligne XV-XV de la figure 11
- les figures 16 à 19 sont des vues en coupe partielle analogue à la figure 1, montrant diverses positions des éléments constitutifs de l'embrayage; sur la figure 16 l'embrayage est débrayé, garnitures neuves ; sur la figure 17 l'embrayage est embrayé garnitures usées ; sur la figure 18 l'embrayage est débrayé, garnitures usées, et sur la figure 19, l'embrayage est embrayé, usure rattrapée ;

Dans ces figures, l'embrayage à diaphragme 3 comporte un couvercle 2 de forme creuse ayant un fond et des moyens pour sa fixation à un plateau de réaction, éventuellement divisé pour formation d'un volant amortisseur ; le couvercle est globalement en forme d'assiette creuse et comporte à sa périphérie externe un rebord radial formant des moyens de fixation du couvercle au plateau de réaction, ledit rebord étant doté de trous pour passage d'organe de fixation, tels que des vis, du couvercle au plateau de réaction.

Ici, l'embrayage est du type poussé, c'est-à-dire qu'il faut, à l'aide d'une butée de débrayage, non représentée, agir en poussant sur l'extrémité interne des doigts du diaphragme 3, pour désengager (débrayer) l'embrayage. D'une manière générale les doigts du diaphragme forment des moyens débrayeurs pour contrecarrer, sous l'action de la butée de débrayage, l'action des moyens élastiques embrayeurs constitués par la partie périphérique, en forme de rondelle Belleville, du diaphragme. Pour ce faire, le fond du couvercle 2 porte, d'une part, un appui primaire consistant en un embouti réalisé dans le fond du couvercle à la périphérie interne celui-ci, et, d'autre part, en regard de l'appui primaire, un appui secondaire sous forme de têtes de colonnettes 8,. Le diaphragme 3, par la périphérie interne de sa rondelle Belleville, est monté de manière basculante entre lesdits appuis primaire et secondaire. Par la périphérie externe de sa rondelle Belleville, il est en contact avec les zones d'appui 14, décrites ci-après.

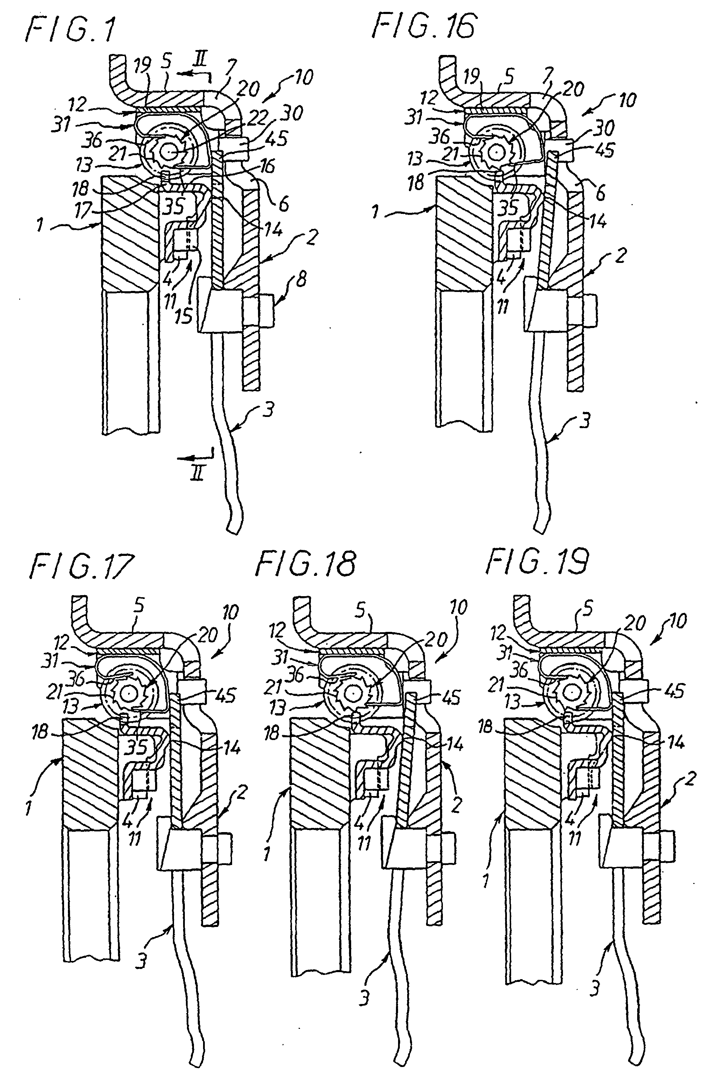

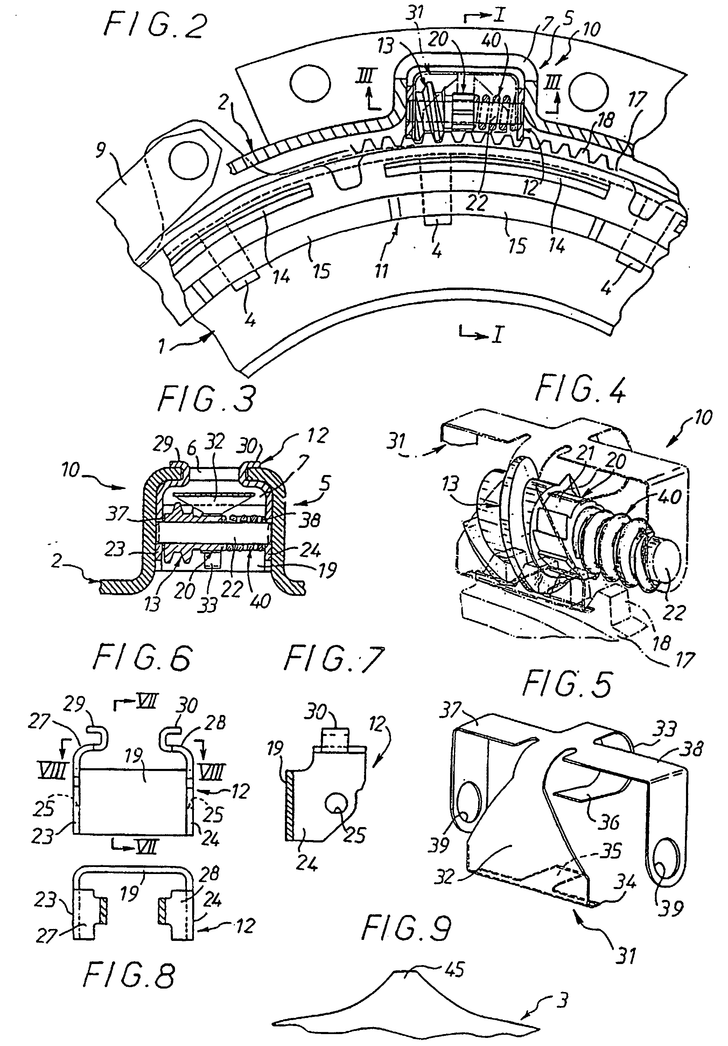

En se reportant aux figures 1 et 2, on voit un mécanisme d'embrayage à friction, notamment pour véhicule automobile, qui comprend un plateau de pression 1 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses et est représenté de manière schématique par exemple dans le document FR-A-2 739 159 précité, ses garnitures de friction étant associées de manière usuelle à un dispositif de progressivité.

Le plateau de pression 1 est solidaire en rotation d'un couvercle 2 de forme creuse par l'intermédiaire de languettes tangentielles 9 qui, élastiques, constituent en même temps des moyens de rappel du plateau de pression 1 vers le couvercle 2, ici métallique en tôle emboutie.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 monté articulé sur le couvercle 2 de la manière précitée grâce aux colonnettes 8 portées par le fond du couvercle 2 troué centralement. De manière connue, la colonnette 8 présente une tête profilée offrant un appui secondaire au diaphragme en regard de l'appui primaire formé par emboutissage du fond du couvercle 2 de forme creuse.

Pour maintenir, lorsque l'embrayage est embrayé, les moyens élastiques à action axiale 3 dans une position indépendante de l'usure des garnitures du disque de friction, et dans une moindre mesure l'usure des plateaux de pression 1 et de réaction dont les faces, dites de friction, s'usent au contact des garnitures du disque, il est prévu un dispositif de rattrapage d'usure 10.

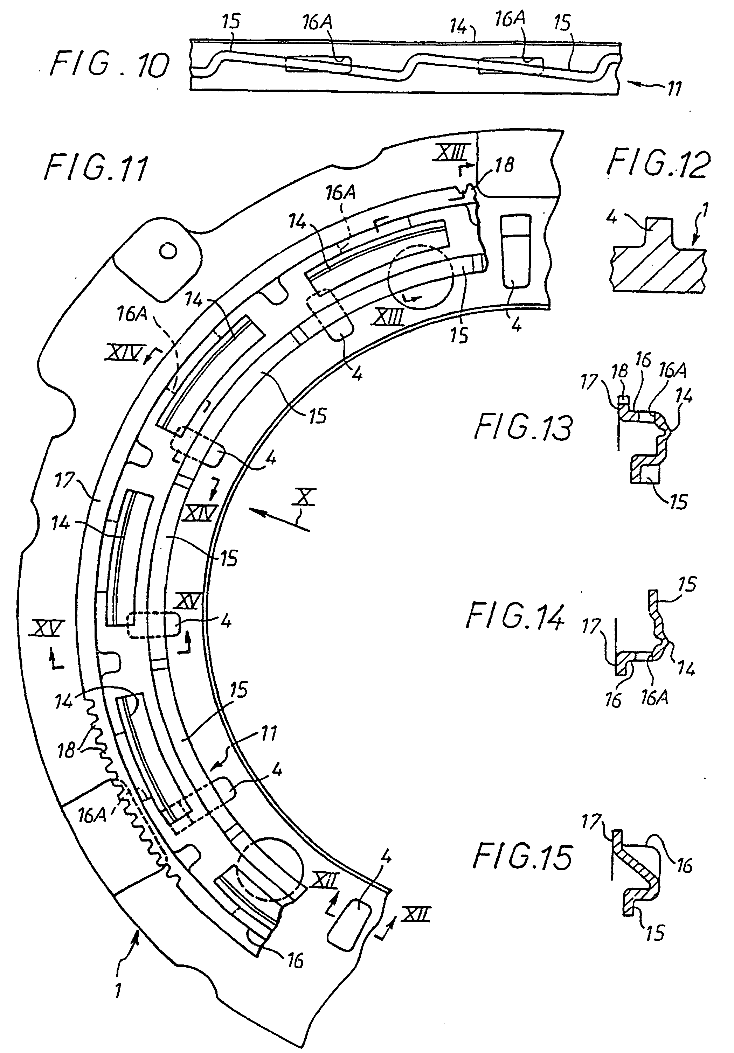

Le dispositif de rattrapage d'usure 10 comprend des moyens à rampes 11 disposées circonférentiellement ; plus précisément, ces moyens à rampes 11, mieux visibles sur les figures 2 et 10, sont constitués d'un anneau en tôle découpée et emboutie de façon à présenter des rampes 15 disposées circonférentiellement; ledit anneau présente également des zones d'appui 14 constituées par l'arête supérieure arrondie d'emboutis en arcs de cercle centrés sur l'axe de l'embrayage et placés radialement à l'extérieur par rapport aux rampes 15.

Le plateau de pression 1 présente, ici venus de moulage, sur sa face tournée vers le fond du couvercle 2, radialement au delà des colonnettes 8, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1. Cette disposition est économique et simple, les moyens à rampes 11 étant métalliques et obtenus par emboutissage, tandis que les plots 4 sont venus de moulage avec le plateau de pression 1 et favorisent la ventilation.

L'une des zones d'appui 14 des moyens à rampes 11 est prolongée, figures 1 et 13, à sa périphérie externe par un rebord 16 parallèle à l'axe de l'embrayage se terminant selon un retour 17 transversal, c'est-à-dire s'étendant dans un plan perpendiculaire à l'axe de l'embrayage, muni à sa périphérie d'une denture 18, en sorte que les zones d'appui 14 peuvent être continues et que le rebord est centré par une surépaisseur du plateau de pression 1.

Selon l'invention, le rebord axial 16 des moyens à rampes 11 présente des ouvertures 16A, ici de forme rectangulaire, facilitant leur ventilation.

Comme cela est visible sur la figure 11, il y a autant d'ouvertures 16A que de rampes 15 et les ouvertures 16A sont situées au droit des rampes 15, avantageusement de manière centrale par rapport aux rampes 15.

Le dispositif de rattrapage d'usure 10 comprend par ailleurs une roue à rochet 20 à dents inclinées 21 solidaire d'un axe 22 qui porte également une vis sans fin 13 disposée ici tangentiellement par rapport à la denture 18 ; le filet et le pas de vis sans fin 13 sont adaptés à la denture 18 des moyens à rampes 11 ; la vis sans fin 13 est amenée à coopérer avec la denture 18 dans les conditions qui sont décrites ci-après.

L'axe 22 de la roue à rochet 20 est porté à rotation par un support 12, mieux visible sur les figures 6 à 8, en tôle découpée et pliée, en forme de U ayant une âme 19 et deux ailes 23, 24 destinées à supporter l'axe 22 ; à cet effet, chacune des ailes porte un trou circulaire 25 adapté au diamètre de l'axe 22.

Les ailes 23, 24 du support 12 se prolongent extérieurement selon des bras 27, 28 en forme de L s'étendant l'un vers l'autre perpendiculairement à l'âme 19 et se terminant chacun, lorsque le support 12 est monté sur le couvercle 2, par une extrémité en forme de C, respectivement 29 et 30, les deux extrémités en forme de C 29 et 30 étant disposées dos à dos au droit l'une de l'autre.

Le couvercle 2 présente une excroissance radiale 5 définissant un logement pour le dispositif 10 de rattrapage d'usure ; ce logement communique avec l'extérieur par une ouverture transversale 6 percée dans la paroi transversale du couvercle 2 ; les bords de cette ouverture transversale 6 sont adaptés à recevoir les extrémités 29 et 30 en forme de C du support 12 qui sont serties sur ces bords, comme le montre la figure 3, et qui, ainsi, fixent le support 12 sur le couvercle ; les figures 1, 2 et 3 montrent que le support 12 s'adapte parfaitement dans le logement, défini par l'excroissance radiale 5, ledit logement et le support 12, ici métallique, ayant des formes complémentaires ; à la jonction entre la paroi transversale du couvercle et le prolongement de la jupe cylindrique du couvercle qui limite ledit logement, une ouverture 7 facilite la ventilation du dispositif 10. Le support 12 est monté radialement au dessus du plateau de pression 1.

Le support 12 est adapté à recevoir un organe élastique 31 de plus faible épaisseur que le support 12, mieux visible sur les figures 4 et 5 ; l'organe élastique 31, ici métallique, est en forme générale de crosse dont chaque extrémité est munie d'un retour vers l'intérieur ; plus précisément, la partie 32 de plus grande longueur de la crosse croit en largeur vers son extrémité se terminant selon un retour 34 qui porte en bout une languette de commande 35 formant pièce de commande ; la partie 33 de plus petite longueur de la crosse à son retour 36, dit cliquet anti-retour, qui s'étant globalement parallèlement à la languette de commande 35 en étant à distance de celle-ci en sorte que, lorsque l'organe élastique 31 et la roue à rochet 20 sont montés dans le support 12, le cliquet anti-retour 36 et la languette de commande 35 coopèrent chacun avec un pied de dent, les deux dents concernées étant ici pratiquement diamétralement opposées, comme le montre la figure 1 ; pour son montage dans le support 12, l'organe élastique 31 porte latéralement des bras en équerre 37, 38 disposés de part et d'autre de la partie élastique en forme de crosse, orthogonalement par rapport à celle-ci, et l'extrémité libre des bras 37,38 en équerre porte des trous 39 dont le diamètre correspond à celui de l'axe 22.

Lorsque l'organe élastique 31 est monté dans le support 12, les extrémités libres des bras 37, 38 s'étendent entre les ailes 23, 24 du support 12, le long de celles-ci ; un ressort hélicoïdal 40 de compression est placé entre la roue à rochet 20 et l'extrémité libre du bras 38, en étant enroulé autour de l'axe 22 ; la vis sans fin 13 et la roue à rochet 20 sont taillées dans une même pièce ; comme on le voit, le support 12 équipé de cette même pièce, de l'organe élastique 31, du ressort 40 et de l'axe 22 constitue un sous-ensemble prêt à être installé dans le couvercle 2.

Le ressort hélicoïdal 40 constitue le moyen élastique de rattrapage, comme décrit ci-dessous ; la roue à rochet 20 est au droit du cliquet anti-retour 36 qui, , par coopération avec les dents 21 inclinées de la roue à rochet 20, empêche de tourner la roue à rochet 20, ainsi que la vis sans fin 13, dans le sens contraire à celui des aiguilles d'une montre, par rapport aux figures 1 et 16 à 19.

Le support 12, portant la roue à rochet 20, la vis sans fin 13 et le ressort hélicoïdal 40, étant solidaire du couvercle 2, le diaphragme 3 se déplace par rapport à lui lors des opérations de débrayage et de ré-embrayage ; le diaphragme 3 porte à sa périphérie un appendice radial dit actionneur 45, figure 9, s'étendant radialement à l'extérieur de la partie rondelle Belleville du diaphragme 3 pour coopérer avec la zone élargie de la partie de grande longueur 32 de l'organe élastique 31 ; on comprendra que, grâce à cette disposition, lors du basculement du diaphragme 3 lors des opérations de débrayage et de ré-embrayage, l'actionneur 45 déplace cette partie 32 de la droite vers la gauche, par rapport à la figure 1, et la languette de commande 35, par coopération avec les dents 21 de la roue à rochet 20, est amenée à faire tourner la roue à rochet 20 dans le sens horaire ; lorsque l'actionneur 45, au retour, est déplacé de la gauche vers la droite, l'élasticité de la partie 32 de l'organe élastique 31 et l'inclinaison des dents 21 font que cette partie 32 se déplace vers la droite en montant sur les dents 21 qui sont maintenues fixes en rotation par le cliquet anti-retour 36 et/ou les frottements internes.

Le dispositif de rattrapage d'usure qui vient d'être décrit fonctionne comme suit, sachant que le système 18-vis sans fin 13 est irréversible, la vis 13 est irréversible, la vis 13 pouvant entraîner la denture 18 et pas l'inverse.

La figure 1 représente l'embrayage engagé, les garnitures du disque de friction étant à l'état neuf et serrées entre le plateau de réaction, non représenté, et le plateau de pression 1. Dans cette position, la languette de commande 35 et le cliquet anti-retour 36, tous deux élastiquement déformables, ont leur extrémité au pied d'une dent de la roue à rochet 20.

Lorsque l'embrayage est débrayé, le diaphragme 3 a basculé autour des colonnettes 8 entraînant à sa périphérie son appendice actionneur 45 vers le fond du couvercle 2 ; dans son déplacement, l'actionneur 45 libère progressivement la languette de commande 35 dont l'extrémité suit la rampe inclinée constituée par la dent dans le pied de laquelle elle se trouvait dans l'étape précédente, les dents 21 de la roue à rochet 20 étant réalisées en sorte que, lors de cette course de débrayage garnitures neuves, l'extrémité de la languette de commande 35 ne saute pas une dent, le cliquet anti-retour 36 maintenant la roue à rochet 20 ; ceci est obtenu par la venue en butée de la partie 32 de l'organe élastique 31, contre le support 12, plus précisément contre les bras 27, 28 du support 12 qui constituent une butée de contrôle et, selon une caractéristique de l'invention, limitent la course de retour de cette partie 32 quelle que soit celle de l'actionneur 45 du diaphragme 3, comme le montre la figure 16.

Lorsque les garnitures s'usent, comme on le sait le plateau de pression 1, toujours soumis à l'effort axial du diaphragme 3, se rapproche du plateau de réaction qui est fixe axialement comme le couvercle 2 ; l'actionneur 45 du diaphragme 3 se rapproche donc du plateau de réaction, c'est-à-dire donc de l'extrémité ouverte du couvercle 2, en entraînant dans son mouvement la languette de commande 35 ; la roue à rochet 20 tourne autour de son axe dans le sens horaire, sens pour lequel le cliquet anti-retour 36 n'assure pas sa fonction mais peut sauter d'une dent à l'autre ; l'embrayage engagé, garnitures usées, est représenté sur la figure 17. Cet entraînement en rotation de la roue à rochet 20 conduit la vis sans fin 13 à tourner également sur son axe ; les moyens de rampes 11 étant immobilisés par rapport au couvercle 3 sous l'effet de la charge du diaphragme 3, la vis sans fin 13 qui engrène avec la denture 18 des moyens de rampes 11 se visse en quelque sorte sur cette denture 18 en comprimant le ressort hélicoïdal 40, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures en s'éloignant d'elles sous l'action des languettes tangentielles 9 qui ramènent vers le fond du couvercle 2 le plateau de pression 1 ainsi que les moyens à rampes 11 en contact avec le diaphragme 3 par leurs zones d'appui 14 et avec les plots 4 du plateau de pression 1 par leurs rampes 15. Le ressort hélicoïdal 40 sollicite la vis sans fin 13 vers l'aile 23 du support 12, qu'elle a quittée en phases d'usure, c'est-à-dire de la droite vers la gauche par rapport aux figures 2 et 3 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de frottement généré par l'effort de rappel de languette tangentielles 9 ; si la charge du ressort hélicoïdal 40 est suffisante pour vaincre cet effort , alors le ressort 40 déplace la vis sans fin 13 qui est empêché de tourner sur elle même par la pression du cliquet anti-retour 36 et qui entraînera la denture 18 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant ainsi au moins en partie le déplacement du plateau de pression 1 dû à l'usure des garnitures. La charge du ressort hélicoïdal 40 étant fonction de la quantité dont il aura été comprimé par la vis sans fin 13 durant les phases d'usure, on voit que Plusieurs opérations d'embrayage et de débrayage peuvent être nécessaires avant que le dispositif de rattrapage d'usure 10 n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une usure correspondant à trois dixièmes de millimètres ; sur la figure 18, qui correspond à l'embrayage débrayé garnitures usées, on a supposé qu'il n'y a pas eu de rattrapage ; on a supposé également que l'usure a été suffisante pour que la roue à rochet 20 ait suffisamment tourné de sorte qu'au retour la languette de commande 35 a sauté une dent.

Lors de l'opération d'embrayage, la languette de commande 35, poussée par l'actionneur 45, fait tourner la roue à rochet 20 et les moyens à rampes 11, non encore serrés par le diaphragme 3, tournent et compensent le déplacement du plateau de pression 1 dû à l'usure ; en fin de l'opération de rattrapage, figure 19, le diaphragme 3, la roue à rochet 20, le cliquet anti-retour 36 et la languette de commande 35 retrouvent la position qu'ils occupaient à la figure 1.

Dans la variante qui vient d'être décrite, la vis sans fin 13 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

Dans tout ce qui précède, les moyens anti-retour sont constitués par un cliquet qui coopère avec la roue à rochet ; en variante, ce sont des moyens de frottement, mme des moyens de frottement par exemple.

Ainsi qu'on l'aura compris, la distance entre la face de friction du plateau de pression qui est la face du plateau de pression destinée à coopérer avec les garnitures de friction du disque de friction, et les zones d'appui 14 augmente en fonction de l'usure des garnitures de friction et des contre-matériaux pour que le diaphragme occupe la même position.

Les plots 4 peuvent présenter un chanfrein pour coopérer avec les moyens à rampes 11, plus précisément avec les rampes 15.

Dans les figures illustrées, les moyens à rampes 11 sont portés centrés par la périphérie externe du plateau de pression 1, qui est en deux parties, à savoir le plateau de pression proprement dit et les moyens à rampes 11.

Plus précisément, le plateau de pression présente à sa périphérie externe un bossage fractionné saillant axialement en direction du couvercle 2.

Ce bossage est une forme annulaire et sert, par sa périphérie externe, de centreur au rebord axial 16 en contact intime par sa périphérie interne avec la périphérie externe dudit bossage afin d'être centré.

En variante, les moyens à rampes 11 peuvent être centrés intérieurement par le plateau de pression et comporter à cet effet intérieurement un rebord axial.

Ainsi qu'on l'aura compris, le bossage du plateau de pression correspond à un bossage normal d'un plateau de pression dans lequel on coupe l'extrémité formant un appui pour le diaphragme, pour remplacer cet appui par les zones d'appui 14.

Bien entendu, les plots 4 peuvent être remplacés par des rampes complémentaires aux rampes 15.

On appréciera que le dispositif de rattrapage d'usure est peu sensible aux vibrations axiales et torsionnelles, notamment à celles dues aux vibrations axiales du vilebrequin du moteur du véhicule automobile. Il est également peu sensible aux effets de la force centrifuge et aux phénomènes de déformations thermiques et de corrosion.

En effet l'irréversibilité de l'action de la vis sans fin sur une denture solidaire des moyens à rampes en liaison avec les moyens anti-retour empêche un fonctionnement intempestif du dispositif de rattrapage d'usure, compte tenu des vibrations, alors qu'il n'y a pas d'usure. Ainsi le plateau de pression ne peut pas entraîner la vis sans fin par l'intermédiaire des moyens de rampes.

La présence du support porté par le couvercle et portant la pièce de commande et les moyens anti-retour, en combinaison avec le centrage des moyens de rampe par le plateau de pression, permet au dispositif de rattrapage d'usure de bien résister aux phénomènes de la force centrifuge.

L'ensemble roue à rochet-vis sans fin ressort hélicoïdal est peu encombrant et ne gêne pas la ventilation de l'embrayage. Cette ventilation est favorisée par la présence des ouvertures dans les moyens à rampes, ainsi que par la présence des plots.

L'action des moyens élastiques à action axiale sur la pièce de commande coopérant avec la roue à rochet permet de décoincer le dispositif de rattrapage d'usure.

Les moyens élastiques à action axiale peuvent avoir une autre forme comme décrit par exemple dans les demandes FR 97 11058 du 5 septembre 1997, FR 97 04213 et FR 97 04214 du 7 avril 1997.

Ainsi en se reportant aux figures 4,5 et 3,4 respectivement des documents FR 97 11058 et FR 97 04214 on voit qu'une rondelle Belleville est montée en série avec le diaphragme pour constituer les moyens élastiques embrayeurs à action axiale de l'embrayage. Le diaphragme étant en contact avec la languette de commande directement ou indirectement, par l'intermédiaire de moyens de transmission d'efforts intervenant entre la rondelle Belleville et le diaphragme.

La rondelle Belleville est une rondelle d'assistance du type positive.

Cette rondelle d'assistance est par exemple dimensionnée en fonction des moyens de progressivité montés au sein du disque de friction.

Bien entendu la rondelle d'assistance peut être montée en parallèle avec le diaphragme , par exemple en agissant entre le couvercle et l'extrémité interne des doigts du diaphragme, tel que décrit dans le document FR-A 2 728 638. En variante les deux rondelles Bellevilles sont montées en série sont prévues en combinaison avec un dispositif débrayeur comme décrit par exemple à la figure 1 du document FR-97 11058. Dans ce cas c'est la rondelle Belleville du type négatif qui prend appui sur les moyens à rampes.

Bien entendu, le dispositif de rattrapage d'usure peut avoir une autre forme. Il en est de même du support. Toutes les variantes de réalisations décrites dans la demande FR 96 11297 du 17-09-96 étant envisageables.

## Revendications

1. Embrayage à friction, comportant un plateau de réaction destiné à être calé en rotation sur un arbre menant, un disque de friction, portant à sa périphérie externe des garnitures de friction, destiné à être calé en rotation sur un arbre mené, un plateau de pression (1), un couvercle (2) fixé sur le plateau de réaction, des moyens élastiques à action axiale (3) agissant entre, d'une part, le couvercle (2) et, d'autre part, le plateau de pression (1) par l'intermédiaire de moyens d'appui (14), le plateau de pression (1) étant solidaire en rotation du couvercle (2) tout en pouvant se déplacer axialement par rapport à lui et étant soumis à l'action de moyens élastiques de rappel (9) rappelant le plateau de pression (1) axialement vers le couvercle (2), ledit embrayage comportant également un dispositif de rattrapage d'usure comprenant des moyens à rampes (11) disposées circonférentiellement, placés axialement entre les moyens d'appui (14) et le plateau de pression (1) et adaptés à être entraînés en rotation grâce à une denture (18) qu'ils portent à leur périphérie et avec laquelle coopère une vis sans fin (13), des moyens d'entraînement en rotation (20) de la vis sans fin (13) étant prévus, rendus opérationnels par l'usure des garnitures de friction lorsque l'embrayage est embrayé, **caractérisé par le fait que** les moyens à rampes (11) présentent des ouvertures (16A) de ventilation.

2. Embrayage à friction selon la revendication 1, **caractérisé par le fait que** les moyens à rampes (11) sont constitués d'un anneau présentant des rampes (15) inclinées et réparties circonférentiellement, le plateau de pression (1) présentant des plots (4) ou des rampes destinées à coopérer avec les rampes (15) des moyens à rampes (11).

3. Embrayage à friction selon la revendication 2, **caractérisé par le fait que** ledit anneau présente également des zones d'appui (14) constituées par l'arête supérieure arrondie d'emboutis disposés en arc de cercle centrés sur l'axe de l'embrayage et placés radialement à l'extérieur par rapport aux rampes.

4. Embrayage à friction selon la revendication 1, **caractérisé par le fait que** les moyens à rampes (11) présentent un rebord axial (16) muni des ouvertures (16A) de ventilation.

5. Embrayage à friction selon la revendication 4, **caractérisé par le fait que** le rebord axial (16) centre les moyens à rampes (11) par rapport au plateau de pression (1).

6. Embrayage à friction selon la revendication 1, **caractérisé par le fait que** chaque ouverture (16A) est au droit d'une rampe (15).

7. Embrayage à friction selon la revendication 6, **caractérisé par le fait qu'**il y a autant d'ouvertures (16A) que de rampes (15).

8. Embrayage à friction selon les revendications 1 à 7, **caractérisé par le fait que** les moyens élastiques à action axiale (3) comportent un diaphragme.

9. Embrayage à friction selon la revendication 8, **caractérisé par le fait que** la vis sans fin (13) et les moyens d'entraînement en rotation (20) de la vis sans fin (13) sont portés par le support (12) solidaire du couvercle (2), et les moyens d'entraînement en rotation (20), de la vis sans fin (13), sont commandés par le diaphragme (3).

10. Embrayage à friction selon la revendication 1, **caractérisé par le fait que** l'embrayage est du type poussé.

## Patentansprüche

1. Reibungskupplung mit einer Gegendruckplatte, die dafür vorgesehen ist, drehfest auf einer Antriebswelle befestigt zu werden, einer an ihrem äußeren Rand Reibbeläge tragenden Reibscheibe, die dafür vorgesehen ist, drehfest auf einer Abtriebswelle befestigt zu werden, einer Druckplatte (1), einem an der Gegendruckplatte befestigten Deckel (2), axial wirksamen und zwischen einerseits dem Deckel (2) und andererseits der Druckplatte (1) mittels Anschlagmitteln (14) wirkenden elastischen Mitteln (3), wobei die Druckplatte (1) in Drehrichtung fest mit dem Deckel (2) verbunden ist, während sie sich jedoch relativ zu diesem axial verschieben kann und der Wirkung elastischer Rückstellmittel (9) unterliegt, die die Druckplatte (1) axial zum Deckel (2) hin zurückstellen, wobei die Kupplung auch eine Verschleiß-Nachstelleinrichtung aufweist, die in Umfangsrichtung angeordnete Rampenmittel (11) umfasst, welche axial zwischen den Anschlagmitteln (14) und der Druckplatte (1) angebracht und dafür ausgelegt sind, mittels einer Zahnung (18), die sie an ihrem Rand tragen und die mit der eine Schnecke (13) zusammenwirkt, in Drehung versetzt zu werden, wobei Antriebsmittel (20) zur Drehung der Schnecke (13) vorgesehen sind, die durch den Verschleiß der Reibbeläge in Betrieb gesetzt werden, wenn die Kupplung eingerückt wird, **dadurch gekennzeichnet, dass** die Rampenmittel (11) Ventilationsöffnungen (16A) aufweisen.

2. Reibungskupplung nach Anspruch 1, **dadurch gekennzeichnet, dass** die Rampenmittel (11) von einem Ring gebildet werden, der geneigte und über den Umfang verteilte Rampen (15) aufweist, wobei die Druckplatte (1) Blöcke (4) oder Rampen aufweist. die dafür vorgesehen sind, mit den Rampen (15) der Rampenmittel (11) zusammen zu wirken.

3. Reibungskupplung nach Anspruch 2, **dadurch gekennzeichnet, dass** der Ring ebenfalls Anschlagzonen (14) aufweist, welche durch die obere runde Kante von Tiefziehteilen gebildet werden, die in einem auf die Achse der Kupplung zentrierten Kreisbogen angeordnet und relativ zu den Rampen radial außen angebracht sind.

4. Reibungskupplung nach Anspruch 1, **dadurch gekennzeichnet, dass** die Rampenmittel (11) eine axiale Leiste (16) aufweisen, die mit Ventilationsöffnungen (16A) ausgerüstet ist.

5. Reibungskupplung nach Anspruch 4, **dadurch gekennzeichnet, dass** die axiale Leiste (16) die Rampenmittel (11) relativ zur Druckplatte (1) zentriert.

6. Reibungskupplung nach Anspruch 1, **dadurch gekennzeichnet, dass** sich jede Öffnung (16A) im Bereich einer Rampe (15) befindet.

7. Reibungskupplung nach Anspruch 6, **dadurch gekennzeichnet, dass** es so viele Öffnungen (16A) wie Rampen (15) gibt.

8. Reibungskupplung nach den Ansprüchen 1 bis 7, **dadurch gekennzeichnet, dass** die axial wirksamen elastischen Mittel (3) eine Federplatte umfassen.

9. Reibungskupplung nach Anspruch 8, **dadurch gekennzeichnet, dass** die Schnecke (13) und die Antriebsmittel (20) zum Drehen der Schnecke (13), von einem fest mit dem Deckel (2) verbundenen Träger (12) getragen werden, und die Antriebsmittel (20) zum Drehen der Schnecke (13) durch die Federplatte (3) gesteuert werden.

10. Reibungskupplung nach Anspruch 1, **dadurch gekennzeichnet, dass** sie eine gedrückte Kupplung ist.

## Claims

1. A friction clutch, comprising a reaction plate adapted to be mounted in rotation on a driving shaft, a friction disc carrying friction liners at its outer periphery and adapted to be mounted in rotation on a driven shaft, a pressure plate (1), a cover plate (2) fixed on the reaction plate, axially acting resilient means (3) acting between, firstly, the cover plate (2), and secondly, the pressure plate (1) through abutment means (14), the pressure plate (1) being fixed in rotation to the cover plate (2) while being able to be displaced axially with respect thereto and being subjected to the action of resilient return means (9) for returning the pressure plate (1) axially towards the cover plate (2), the said clutch further including a wear compensating device comprising circumferentially disposed ramp means (11) located axially between the abutment means (14) and the pressure plate (1) and adapted to be driven in rotation by means of a set of teeth (18), which they carry at their periphery and with which a worm (13) co-operates, means (20) for driving the worm (13) in rotation being provided and being rendered operational by wear in the friction liners when the clutch is engaged, **characterised by** the fact that the ramp means (11) have ventilating apertures (16A).

2. A · friction clutch according to Claim 1, **characterised by** the fact that the ramp means (11) consist of an annular ring having ramps (15) which are inclined and spaced apart circumferentially, the pressure plate (1) having pads (4) or ramps adapted to cooperate with the ramps (15) of the ramp means (11).

3. A friction clutch according to Claim 2, **characterised by** the fact that the said annular ring also has engagement zones (14) consisting of the rounded upper edge of press-formed projecting elements disposed on an arc of a circle centred on the axis of the clutch and located radially outwardly with respect to the ramps.

4. A friction clutch according to Claim 1, **characterised by** the fact that the ramp means (11) have an axial flange (16) which is provided with ventilating apertures (16A).

5. A friction clutch according to Claim 4, **characterised by** the fact that the axial flange (16) centres the ramp means (11) with respect to the pressure plate (1).

6. A friction clutch according to Claim 1, **characterised by** the fact that each aperture (16A) is in line with a ramp (15).

7. A friction clutch according to Claim 6, **characterised by** the fact that there are the same number of apertures (16A) as there are ramps (15).

8. A friction clutch according to Claims 1 to 7, **characterised by** the fact that the axially acting resilient means (3) comprise a diaphragm.

9. A friction clutch according to Claim 8, **characterised by** the fact that the worm (13) and the means (20) for driving the worm (13) in rotation are carried by the support (12) fixed to the cover plate (2), and the means (20) for driving the worm (13) in rotation are controlled by the diaphragm (3).

10. A friction clutch according to Claim 1, **characterised by** the fact that the clutch is of the push-to-release type.
